(19)

Europäisches
Patentamt

European
Patent Office

Office européen
des brevets

(11) **EP 4 779 891 A1**

(12) **EUROPEAN PATENT APPLICATION**
published in accordance with Art. 153(4) EPC

(43) Date of publication:
**22.07.2026 Bulletin 2026/30**

(21) Application number: **24870432.2**

(22) Date of filing: **10.09.2024**

(51) International Patent Classification (IPC):
**H04B 7/06** (2006.01)  **H04B 7/0456** (2017.01)

(52) Cooperative Patent Classification (CPC):
**H04B 7/0456; H04B 7/06**

(86) International application number:
**PCT/CN2024/117868**

(87) International publication number:
**WO 2025/066887 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311288632**

(71) Applicant: **HUAWEI TECHNOLOGIES CO., LTD.**
**Shenzhen, Guangdong 518129 (CN)**

(72) Inventors:
• **YE, Chencheng**
**Shenzhen, Guangdong 518129 (CN)**
• **LI, Ting**
**Shenzhen, Guangdong 518129 (CN)**
• **GAO, Junhui**
**Shenzhen, Guangdong 518129 (CN)**
• **WANG, Xiaohan**
**Shenzhen, Guangdong 518129 (CN)**

(74) Representative: **Isarpatent**
**Patent- und Rechtsanwälte Part G mbB**
**Friedrichstrasse 31**
**80801 München (DE)**

(54) **COMMUNICATION METHOD AND COMMUNICATION APPARATUS**

(57)    This application provides a communication method and a communication apparatus. The communication method includes: A terminal device reports a full-channel measurement result to a network device through two-stage feedback. The terminal device feeds back, at a first stage, at least one space-frequency basis group in which all antenna ports of the terminal device have a non-zero coefficient in a matrix corresponding to a space domain basis set and a frequency domain basis set, and specifically feeds back, at a second stage, a location at which each of all the antenna ports has a non-zero coefficient in the at least one space-frequency basis group. In embodiments of this application, resource overheads for full-channel feedback can be reduced in the two-stage feedback method.

Terminal device          Network device

Step S210: Fifth information, indicating a quantity of at least one first space-frequency basis group

Step S212: First information, indicating the at least one first space-frequency basis group in a first matrix

Step S214: Second information, indicating a correspondence between the at least one first space-frequency basis group and a non-zero coefficient of each of N antenna ports

FIG. 2

## Description

This application claims priority to Chinese Patent Application No. 202311288632.8, filed with the China National Intellectual Property Administration on September 28, 2023 and entitled "COMMUNICATION METHOD AND COMMUNICATION APPARATUS", which is incorporated herein by reference in its entirety.

## TECHNICAL FIELD

This application relates to the field of communication technologies, and more specifically, to a communication method and a communication apparatus.

## BACKGROUND

In a 5G communication system, application of a massive multiple-input multiple-output (massive multiple-input multiple-output, massive MIMO) technology plays a crucial role in improving a frequency spectrum of the system. When the massive MIMO technology is used, before sending data to a terminal device, a network device sends a channel state information reference signal (channel state information reference signal, CSI-RS) to the terminal device, receives channel state information (channel state information, CSI) fed back by the terminal device, and precodes the data based on the CSI. The CSI includes a channel quality indicator (channel quality indicator, CQI), a precoding matrix indication (precoding matrix indication, PMI), a rank indicator (rank indicator, RI), and the like.

In R16, the terminal device feeds back, in the PMI, a precoding matrix corresponding to each of a plurality of transport layers. Currently, another manner is mentioned. To be specific, the CSI is used to feed back a channel corresponding to each antenna port of the terminal device. In this manner, the network device can obtain more accurate channel information. However, when the terminal device performs full-channel feedback, a quantity of antenna ports of the terminal device may be greater than a quantity of transport layers of the terminal device. Therefore, total resource overheads needed by the terminal device for the feedback increase.

## SUMMARY

This application provides a communication method and a communication apparatus, to reduce resource overheads for feedback performed by a terminal device.

According to a first aspect, a communication method is provided. The method may be performed by a terminal device, or may be performed by a module (for example, a chip or a circuit) in the terminal device, or may be performed by a logical node, a logical module, or software that can implement all or some functions of the terminal device. This is not limited in this application.

The method includes: N antenna ports of the terminal device correspond to a first matrix, the first matrix corresponds to 2L space domain bases and M frequency domain bases, the first matrix includes 2L*M coefficients, each coefficient corresponds to one space domain basis group, and each space domain basis group includes one space domain basis and one frequency domain basis. The terminal device sends first information to a network device, where the first information indicates at least one first space-frequency basis group in the first matrix, and the at least one first space-frequency basis group is a union set of space-frequency basis groups corresponding to respective non-zero coefficients of the N antenna ports. The terminal device sends second information to the network device, where the second information indicates a correspondence between the at least one first space-frequency basis group and a non-zero coefficient of each of the N antenna ports. 2L, M, and N are all positive integers greater than or equal to 1.

Specifically, the first information and/or the second information may be carried in CSI.

According to the foregoing method, the terminal device performs two-stage full-channel feedback. The terminal device feeds back, at a first stage, at least one space-frequency basis group in which all antenna ports of the terminal device have a weighting coefficient in a matrix corresponding to a space domain basis set and a frequency domain basis set, and specifically feeds back, at a second stage, a location at which each antenna port has a weighting coefficient in the at least one space-frequency basis group. Resource overheads for the full-channel feedback can be reduced in the two-stage feedback method.

With reference to the first aspect, in some implementations of the first aspect, the method further includes: The terminal device receives fifth information from the network device, where the fifth information indicates a quantity of the at least one first space-frequency basis group.

It should be noted that, if the quantity (X) of the at least one first space domain basis group indicated by the network device by using the fifth information is less than a quantity (Y) of the at least one first space domain basis group determined by the terminal device, the terminal device selects X first space domain basis groups with a high non-zero coefficient from the determined Y first space domain basis groups, and indicates the X first space domain basis groups with the high non-zero coefficient to the network device by using the first information.

In this case, both the first information and the second information reported by the terminal device to the network device are information of a fixed length. The first information may be carried in a CSI part 1, and the second information is carried in a CSI part 2; or both the first information and the second information may be carried in a CSI part 1; or both the first information and the second information may be carried in a CSI part 2. This is not limited in this application.

According to the foregoing method, both the first information and the second information reported by the terminal device to the network device are of a fixed length, and the terminal device may send the information to the network device by using a fixed resource, without configuring a resource additionally, thereby reducing complexity of resource configuration.

With reference to the first aspect, in some implementations of the first aspect, a ranking of the at least one first space-frequency basis group may be indicated by the following formula:

$$\mathrm{Pri}(i, f) = 2L\pi(f) + i$$

2L is a quantity of space domain bases, a value range of f is $0 \leq f \leq M$, a value range of i is $0 \leq i \leq 2L$, and a value of Pri(i, f) indicates a ranking of a space-frequency basis group corresponding to a space domain basis i and a frequency domain basis f.

Specifically, a smaller value of Pri(i, f) indicates that the space-frequency basis group corresponding to the space domain basis i and the frequency domain basis f is more preferentially indicated in a bitmap (bitmap).

With reference to the first aspect, in some implementations of the first aspect, a ranking of the non-zero coefficient of each of the N antenna ports may be indicated by the following formula:

$$\mathrm{Pri}(n, i, f) = 2LN\pi(f) + Ni + n$$

2L is the quantity of space domain bases, a value range of f is $0 \leq f \leq M$, a value range of i is $0 \leq i \leq 2L$, a value range of n is $1 \leq n \leq N$ or a value range of n is $0 \leq n \leq N-1$, and a value of Pri(n, i, f) indicates a ranking of a non-zero coefficient that is of an antenna port n in the N antenna ports and that corresponds to the space-frequency basis group of the space domain basis i and the frequency domain basis f.

Specifically, a smaller value of Pri(n, i, f) indicates that the coefficient that is of the antenna port n and that corresponds to the space-frequency basis group of the space domain basis i and the frequency domain basis f is more preferentially indicated in the bitmap (bitmap).

It should be understood that a value of the space domain basis i and a value of the frequency domain basis f in the foregoing formula should be a space domain basis and a frequency domain basis in the at least one first space-frequency basis group.

According to a second aspect, a communication method is provided. The method may be performed by a terminal device, or may be performed by a module (for example, a chip or a circuit) in the terminal device, or may be performed by a logical node, a logical module, or software that can implement all or some functions of the terminal device. This is not limited in this application.

The method includes: N antenna ports of the terminal device correspond to a first matrix, the first matrix corresponds to 2L space domain bases and M frequency domain bases, the first matrix includes 2L*M coefficients, each coefficient corresponds to one space domain basis group, and each space domain basis group includes one space domain basis and one frequency domain basis. The terminal device sends third information to a network device, where the third information indicates at least one second space-frequency basis group in the first matrix, and the at least one second space-frequency basis group is an intersection set of space-frequency basis groups corresponding to respective non-zero coefficients of the N antenna ports. The terminal device sends fourth information to the network device, where the fourth information indicates a correspondence between a remaining space-frequency basis group in the first matrix other than the at least one second space-frequency basis group and a non-zero coefficient of each of the N antenna ports other than a non-zero coefficient corresponding to the at least one second space-frequency basis group. 2L, M, and N are all positive integers greater than or equal to 1.

Specifically, the third information and/or the fourth information may be carried in CSI.

According to the foregoing method, the terminal device performs two-stage full-channel feedback. The terminal device feeds back, at a first stage, at least one space-frequency basis group in which all antenna ports of the terminal device have a weighting coefficient in a matrix corresponding to a space domain basis set and a frequency domain basis set, and specifically feeds back, at a second stage, a location, other than the at least one space-frequency basis group, at which each antenna port has a weighting coefficient in the matrix corresponding to the space domain basis set and the frequency domain basis set. Resource overheads for the full-channel feedback can be reduced in the two-stage feedback method.

With reference to the second aspect, in some implementations of the second aspect, the method further includes: The terminal device receives sixth information from the network device, where the sixth information indicates a quantity of the at least one second space-frequency basis group.

It should be noted that, if the quantity (O) of the at least one second space domain basis group indicated by the network device by using the sixth information is less than a quantity (P) of the at least one second space domain basis group determined by the terminal device, the terminal device selects O second space domain basis groups with a high non-zero coefficient from the determined P second space domain basis groups, and indicates the O second space domain basis groups with the high non-zero coefficient to the network device by using the third information.

In this case, both the third information and the fourth information reported by the terminal device to the network device are information of a fixed length. The third information may be carried in a CSI part 1, and the fourth information is carried in a CSI part 2; or both the third information and the fourth information may be carried in a CSI part 1; or both the third information and the fourth information may be carried in a CSI part 2. This is not limited in this application.

According to the foregoing method, both the third information and the fourth information reported by the terminal device to the network device are of a fixed length, and the terminal device may send the information to the network device by using a fixed resource, without configuring a resource additionally, thereby reducing complexity of resource configuration.

With reference to the second aspect, in some implementations of the second aspect, a ranking of the at least one second space-frequency basis group may be indicated by the following formula:

$$\mathrm{Pri}(i, f) = 2L\pi(f) + i$$

$2L$ is a quantity of space domain bases, a value range of $f$ is $0 \leq f \leq M$, a value range of $i$ is $0 \leq i \leq 2L$, and a value of $\mathrm{Pri}(i, f)$ indicates a ranking of a space-frequency basis group corresponding to a space domain basis $i$ and a frequency domain basis $f$.

Specifically, a smaller value of $\mathrm{Pri}(i, f)$ indicates that the space-frequency basis group corresponding to the space domain basis $i$ and the frequency domain basis $f$ is more preferentially indicated in a bitmap (bitmap).

With reference to the second aspect, in some implementations of the second aspect, a ranking of the non-zero coefficient of each of the $N$ antenna ports other than the non-zero coefficient corresponding to the at least one second space-frequency basis group may be indicated by the following formula:

$$\mathrm{Pri}(n, i, f) = 2LN\pi(f) + Ni + n$$

$2L$ is the quantity of space domain bases, a value range of $f$ is $0 \leq f \leq M$, a value range of $i$ is $0 \leq i \leq 2L$, a value range of $n$ is $1 \leq n \leq N$ or a value range of $n$ is $0 \leq n \leq N-1$, and a value of $\mathrm{Pri}(n, i, f)$ indicates a ranking of a non-zero coefficient that is of an antenna port $n$ in the $N$ antenna ports and that corresponds to the space-frequency basis group of the space domain basis $i$ and the frequency domain basis $f$.

Specifically, a smaller value of $\mathrm{Pri}(n, i, f)$ indicates that the coefficient that is of the antenna port $n$ and that corresponds to the space-frequency basis group of the space domain basis $i$ and the frequency domain basis $f$ is more preferentially indicated in the bitmap (bitmap).

It should be understood that a value of the space domain basis $i$ and a value of the frequency domain basis $f$ in the foregoing formula should be a space domain basis and a frequency domain basis in the remaining space-frequency basis group in the first matrix other than the at least one second space-frequency basis group.

According to a third aspect, a communication method is provided. The method may be performed by a network device, or may be performed by a module (for example, a chip or a circuit) in the network device, or may be performed by a logical node, a logical module, or software that can implement all or some functions of the network device. This is not limited in this application.

The method includes: The network device receives first information from a terminal device, where the first information indicates at least one first space-frequency basis group in a first matrix, the at least one first space-frequency basis group is a union set of space-frequency basis groups corresponding to respective non-zero coefficients of $N$ antenna ports of the terminal device, the first matrix corresponds to $2L$ space domain bases and $M$ frequency domain bases, the first matrix includes $2L*M$ coefficients, each coefficient corresponds to one space domain basis group, each space domain basis group includes one space domain basis and one frequency domain basis, and the $N$ antenna ports of the terminal device correspond to the first matrix. The network device receives second information from the terminal device, where the second information indicates a correspondence between the at least one first space-frequency basis group and a non-zero coefficient of each of the $N$ antenna ports. $2L$, $M$, and $N$ are all positive integers greater than or equal to 1.

Specifically, the first information and/or the second information may be carried in CSI.

According to the foregoing method, the terminal device performs two-stage full-channel feedback. The terminal device feeds back, at a first stage, at least one space-frequency basis group in which all antenna ports of the terminal device have a weighting coefficient in a matrix corresponding to a space domain basis set and a frequency domain basis set, and specifically feeds back, at a second stage, a location at which each antenna port has a weighting coefficient in the at least one space-frequency basis group. Resource overheads for the full-channel feedback can be reduced in the two-stage feedback method.

With reference to the third aspect, in some implementations of the third aspect, the method further includes: The network device sends fifth information to the terminal device, where the fifth information indicates a quantity of the at least one first space-frequency basis group.

It should be noted that, if the quantity (X) of the at least one first space domain basis group indicated by the network device by using the fifth information is less than a quantity (Y) of the at least one first space domain basis group determined by the terminal device, the terminal device selects X first space domain basis groups with a high non-zero coefficient from the determined Y first space domain basis groups, and indicates the X first space domain basis groups with the high non-zero coefficient to the network device by using the first information.

In this case, both the first information and the second information reported by the terminal device to the network device are information of a fixed length. The first information may be carried in a CSI part 1, and the second information is carried in a CSI part 2; or both the first information and the second information may be carried in a CSI part 1; or both the first information and the second information may be carried in a CSI part 2. This is not limited in this application.

According to the foregoing method, both the first information and the second information reported by the terminal device to the network device are of a fixed length, and the terminal device may send the information to the network device by using a fixed resource, without configuring a resource additionally, thereby reducing complexity of resource configuration.

According to a fourth aspect, a communication method is provided. The method may be performed by a network device, or may be performed by a module (for example, a chip or a circuit) in the network device, or may be performed by a logical node, a logical module, or software that can implement all or some functions of the network device. This is not limited in this application.

The method includes: The network device receives third information from a terminal device, where the third information indicates at least one second space-frequency basis group in a first matrix, the at least one second space-frequency basis group is an intersection set of space-frequency basis groups corresponding to respective non-zero coefficients of N antenna ports, the first matrix corresponds to 2L space domain bases and M frequency domain bases, the first matrix includes 2L*M coefficients, each coefficient corresponds to one space domain basis group, each space domain basis group includes one space domain basis and one frequency domain basis, and the N antenna ports of the terminal device correspond to the first matrix. The network device receives fourth information from the terminal device, where the fourth information indicates a correspondence between a remaining space-frequency basis group in the first matrix other than the at least one second space-frequency basis group and a non-zero coefficient of each of the N antenna ports other than a non-zero coefficient corresponding to the at least one second space-frequency basis group. 2L, M, and N are all positive integers greater than or equal to 1.

Specifically, the third information and/or the fourth information may be carried in CSI.

According to the foregoing method, the terminal device performs two-stage full-channel feedback. The terminal device feeds back, at a first stage, at least one space-frequency basis group in which all antenna ports of the terminal device have a weighting coefficient in a matrix corresponding to a space domain basis set and a frequency domain basis set, and specifically feeds back, at a second stage, a location, other than the at least one space-frequency basis group, at which each antenna port has a weighting coefficient in the matrix corresponding to the space domain basis set and the frequency domain basis set. Resource overheads for the full-channel feedback can be reduced in the two-stage feedback method.

With reference to the fourth aspect, in some implementations of the fourth aspect, the method further includes: The network device sends sixth information to the terminal device, where the sixth information indicates a quantity of the at least one second space-frequency basis group.

It should be noted that, if the quantity (O) of the at least one second space domain basis group indicated by the network device by using the sixth information is less than a quantity (P) of the at least one second space domain basis group determined by the terminal device, the terminal device selects O second space domain basis groups with a high non-zero coefficient from the determined P second space domain basis groups, and indicates the O second space domain basis groups with the high non-zero coefficient to the network device by using the third information.

In this case, both the third information and the fourth information reported by the terminal device to the network device are information of a fixed length. The third information may be carried in a CSI part 1, and the fourth information is carried in a CSI part 2; or both the third information and the fourth information may be carried in a CSI part 1; or both the third information and the fourth information may be carried in a CSI part 2. This is not limited in this application.

According to the foregoing method, both the third information and the fourth information reported by the terminal device to the network device are of a fixed length, and the terminal device may send the information to the network device by using a fixed resource, without configuring a resource additionally, thereby reducing complexity of resource configuration.

According to a fifth aspect, a communication apparatus is provided. N antenna ports of the apparatus correspond to a first matrix, the first matrix corresponds to 2L space domain bases and M frequency domain bases, the first matrix includes 2L*M coefficients, each coefficient corresponds to one space domain basis group, and each space domain basis group includes one space domain basis and one frequency domain basis. The apparatus includes: a transceiver unit, configured to send first information to a network device, where the first information indicates at least one first space-frequency basis group in the first matrix, and the at least one first space-frequency basis group is a union set of space-frequency basis groups corresponding to respective non-zero coefficients of the N antenna ports. The transceiver unit is further configured to send second information to the network device, where the second information indicates a correspondence between the at least one first space-frequency basis group and a non-zero coefficient of each of the N antenna ports. 2L, M, and N are all positive integers greater than or equal to 1.

Specifically, the first information and/or the second information may be carried in CSI.

With reference to the fifth aspect, in some implementations of the fifth aspect, the transceiver unit is further configured to receive fifth information from the network device, where the fifth information indicates a quantity of the at least one first space-frequency basis group.

With reference to the fifth aspect, in some implementations of the fifth aspect, a ranking of the at least one first space-frequency basis group may be indicated by the following formula:

$$\mathrm{Pri(i, f)} = 2L\pi(f) + i$$

2L is a quantity of space domain bases, a value range of f is $0{\leq}f{\leq}M$, a value range of i is $0{\leq}i{\leq}2L$, and a value of Pri(i, f) indicates a ranking of a space-frequency basis group corresponding to a space domain basis i and a frequency domain basis f.

With reference to the fifth aspect, in some implementations of the fifth aspect, a ranking of the non-zero coefficient of each of the N antenna ports may be indicated by the following formula:

$$\mathrm{Pri(n, i, f)} = 2LN\pi(f) + Ni + n$$

2L is the quantity of space domain bases, a value range of f is $0{\leq}f{\leq}M$, a value range of i is $0{\leq}i{\leq}2L$, a value range of n is $1{\leq}n{\leq}N$ or a value range of n is $0{\leq}n{\leq}N-1$, and a value of Pri(n, i, f) indicates a ranking of a non-zero coefficient that is of an antenna port n in the N antenna ports and that corresponds to the space-frequency basis group of the space domain basis i and the frequency domain basis f.

For explanations and beneficial effects of related content of the communication apparatus provided in the fifth aspect, refer to the communication method shown in the first aspect. Details are not described herein again.

According to a sixth aspect, a communication apparatus is provided. N antenna ports of the apparatus correspond to a first matrix, the first matrix corresponds to 2L space domain bases and M frequency domain bases, the first matrix includes 2L*M coefficients, each coefficient corresponds to one space domain basis group, and each space domain basis group includes one space domain basis and one frequency domain basis. The apparatus includes: a transceiver unit, configured to send third information to a network device, where the third information indicates at least one second space-frequency basis group in the first matrix, and the at least one second space-frequency basis group is an intersection set of space-frequency basis groups corresponding to respective non-zero coefficients of the N antenna ports. The transceiver unit is further configured to send fourth information to the network device, where the fourth information indicates a correspondence between a remaining space-frequency basis group in the first matrix other than the at least one second space-frequency basis group and a non-zero coefficient of each of the N antenna ports other than a non-zero coefficient corresponding to the at least one second space-frequency basis group. 2L, M, and N are all positive integers greater than or equal to 1.

Specifically, the third information and/or the fourth information may be carried in CSI.

With reference to the sixth aspect, in some implementations of the sixth aspect, the transceiver unit is further configured to receive sixth information from the network device, where the sixth information indicates a quantity of the at least one second space-frequency basis group.

With reference to the sixth aspect, in some implementations of the sixth aspect, a ranking of the at least one second space-frequency basis group may be indicated by the following formula:

$$\mathrm{Pri(i, f)} = 2L\pi(f) + i$$

2L is a quantity of space domain bases, a value range of f is $0{\leq}f{\leq}M$, a value range of i is $0{\leq}i{\leq}2L$, and a value of Pri(i, f) indicates a ranking of a space-frequency basis group corresponding to a space domain basis i and a frequency domain basis f.

With reference to the sixth aspect, in some implementations of the sixth aspect, a ranking of the non-zero coefficient of each of the N antenna ports other than the non-zero coefficient corresponding to the at least one second space-frequency basis group may be indicated by the following formula:

$$\text{Pri}(n, i, f) = 2LN\pi(f) + Ni + n$$

2L is the quantity of space domain bases, a value range of f is $0 \le f \le M$, a value range of i is $0 \le i \le 2L$, a value range of n is $1 \le n \le N$ or a value range of n is $0 \le n \le N-1$, and a value of Pri(n, i, f) indicates a ranking of a non-zero coefficient that is of an antenna port n in the N antenna ports and that corresponds to the space-frequency basis group of the space domain basis i and the frequency domain basis f.

For explanations and beneficial effects of related content of the communication apparatus provided in the sixth aspect, refer to the communication method shown in the second aspect. Details are not described herein again.

According to a seventh aspect, a communication apparatus is provided. The apparatus includes: a transceiver unit, configured to receive first information from a terminal device, where the first information indicates at least one first space-frequency basis group in a first matrix, the at least one first space-frequency basis group is a union set of space-frequency basis groups corresponding to respective non-zero coefficients of N antenna ports of the terminal device, the first matrix corresponds to 2L space domain bases and M frequency domain bases, the first matrix includes 2L*M coefficients, each coefficient corresponds to one space domain basis group, each space domain basis group includes one space domain basis and one frequency domain basis, and the N antenna ports of the terminal device correspond to the first matrix. The transceiver unit is further configured to receive second information from the terminal device, where the second information indicates a correspondence between the at least one first space-frequency basis group and a non-zero coefficient of each of the N antenna ports. 2L, M, and N are all positive integers greater than or equal to 1.

Specifically, the first information and/or the second information may be carried in CSI.

With reference to the seventh aspect, in some implementations of the seventh aspect, the transceiver unit is further configured to send fifth information to the terminal device, where the fifth information indicates a quantity of the at least one first space-frequency basis group.

For explanations and beneficial effects of related content of the communication apparatus provided in the seventh aspect, refer to the communication method shown in the third aspect. Details are not described herein again.

According to an eighth aspect, a communication apparatus is provided. The apparatus includes: a transceiver unit, configured to receive third information from a terminal device, where the third information indicates at least one second space-frequency basis group in a first matrix, the at least one second space-frequency basis group is an intersection set of space-frequency basis groups corresponding to respective non-zero coefficients of N antenna ports, the first matrix corresponds to 2L space domain bases and M frequency domain bases, the first matrix includes 2L*M coefficients, each coefficient corresponds to one space domain basis group, each space domain basis group includes one space domain basis and one frequency domain basis, and the N antenna ports of the terminal device correspond to the first matrix. The transceiver unit is further configured to receive fourth information from the terminal device, where the fourth information indicates a correspondence between a remaining space-frequency basis group in the first matrix other than the at least one second space-frequency basis group and a non-zero coefficient of each of the N antenna ports other than a non-zero coefficient corresponding to the at least one second space-frequency basis group. 2L, M, and N are all positive integers greater than or equal to 1.

Specifically, the third information and/or the fourth information may be carried in CSI.

With reference to the eighth aspect, in some implementations of the eighth aspect, the transceiver unit is further configured to send sixth information to the terminal device, where the sixth information indicates a quantity of the at least one second space-frequency basis group.

For explanations and beneficial effects of related content of the communication apparatus provided in the eighth aspect, refer to the communication method shown in the fourth aspect. Details are not described herein again.

According to a ninth aspect, a communication apparatus is provided, and includes a processor. The processor is configured to: by executing a computer program or instructions or through a logic circuit, enable the communication apparatus to perform the method according to any one of the first aspect and the possible implementations of the first aspect, or enable the communication apparatus to perform the method according to any one of the second aspect and the possible implementations of the second aspect, or enable the communication apparatus to perform the method according to any one of the third aspect and the possible implementations of the third aspect, or enable the communication apparatus to perform the method according to any one of the fourth aspect and the possible implementations of the fourth aspect.

In a possible implementation, the communication apparatus further includes a memory, configured to store the computer program or the instructions.

In a possible implementation, the communication apparatus further includes a communication interface, configured to input and/or output a signal.

According to a tenth aspect, a communication apparatus is provided, and includes a logic circuit and an input/output interface. The input/output interface is configured to input and/or output a signal. The logic circuit is configured to perform the method according to any one of the first aspect and the possible implementations of the first aspect, or the logic circuit is configured to perform the method according to any one of the second aspect and the possible implementations of the second aspect, or the logic circuit is configured to perform the method according to any one of the third aspect and the possible implementations of the third aspect, or the logic circuit is configured to perform the method according to any one of the fourth aspect and the possible implementations of the fourth aspect.

According to an eleventh aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed.

According to a twelfth aspect, a computer program product is provided, and includes instructions. When the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed.

According to a thirteenth aspect, a communication system is provided. The communication system includes the foregoing terminal device and the foregoing network device. The terminal device is configured to perform the method according to any one of the first aspect and the possible implementations of the first aspect, or the terminal device is configured to perform the method according to any one of the second aspect and the possible implementations of the second aspect. The network device is configured to perform the method according to any one of the third aspect and the possible implementations of the third aspect, or the network device is configured to perform the method according to any one of the fourth aspect and the possible implementations of the fourth aspect.

For descriptions of beneficial effects of the fifth aspect to the thirteenth aspect, refer to the descriptions of the first aspect to the fourth aspect.

## BRIEF DESCRIPTION OF DRAWINGS

FIG. 1 is a diagram of an example of a communication system 100 applicable to an embodiment of this application;

FIG. 2 is a schematic flowchart of a communication method 200 according to an embodiment of this application;

FIG. 3 is a schematic flowchart of a communication method 300 according to an embodiment of this application;

FIG. 4 is a block diagram of an example of a communication apparatus 400 applicable to an embodiment of this application;

FIG. 5 is a block diagram of an example of a communication apparatus 500 applicable to an embodiment of this application; and

FIG. 6 is a block diagram of an example of a communication apparatus 600 applicable to an embodiment of this application.

## DESCRIPTION OF EMBODIMENTS

First, a communication system applicable to embodiments of this application is described.

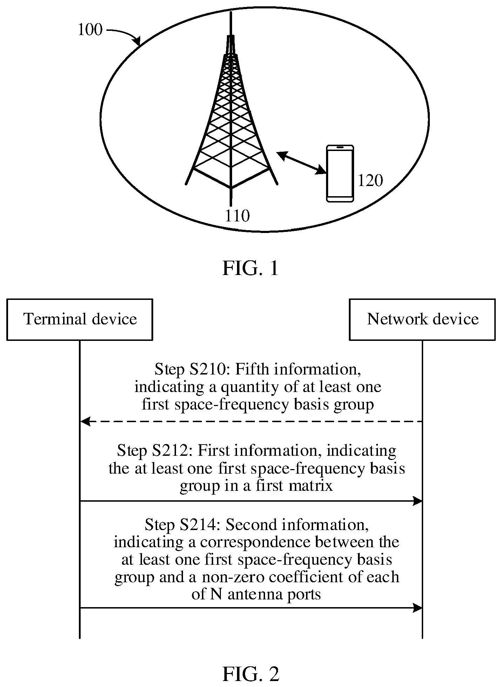

FIG. 1 is a diagram of a communication system 100 applicable to an embodiment of this application. As shown in FIG. 1, the communication system 100 includes a network device 110 and a terminal device 120.

The terminal device 120 is a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device 120 may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a compute device, another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

A communication apparatus configured to implement a function of the terminal device 120 may be a terminal device, or may be an apparatus that can support the terminal device in implementing the function, for example, a chip system. The apparatus may be installed in the terminal device or used in conjunction with the terminal device. In this application, the chip system may include a chip, or may include a chip and another discrete device.

The network device 110 is a device having a wireless transceiver function, and is configured to communicate with the terminal device 120. The network device 110 may be a node in a radio access network (radio access network, RAN), and may be referred to as a base station, or may be referred to as a RAN node. The network device 110 may be an evolved NodeB (evolved NodeB, eNB, or eNodeB) of long term evolution (long term evolution, LTE), a base station in a 5G network like a gNodeB (gNB), a base station in a public land mobile network (public land mobile network, PLMN) evolved after 5G, a broadband network gateway (broadband network gateway, BNG), an aggregation switch, a 3rd generation partnership project (the 3rd generation partnership project, 3GPP) access device, or the like.

The RAN may be configured as a RAN defined in a 3GPP protocol, an open radio access network (open radio access network, O-RAN), a cloud access network (cloud radio access network, C-RAN), or the like. The network device 110 may further include base stations in various forms, for example, a macro base station, a micro base station (also referred to as a small cell), a relay station, a transmitting and receiving point (transmitting and receiving point, TRP), a transmitting point (transmitting point, TP), a mobile switching center, devices that function as a base station in device-to-device (device-to-device, D2D), vehicle-to-everything (vehicle-to-everything, V2X), and machine-to-machine (machine-to-machine, M2M) communication, a network device in a non-terrestrial network (non-terrestrial network, NTN), and the like. This is not specifically limited.

The network device 110 may further include a network element or a module that implements some functions of a base station, for example, include one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) protocol, an enhanced common public radio interface (enhanced common public radio interface, eCPRI) protocol, a fronthaul interface protocol between a DU and an RU in an O-RAN system, or the like. This is not limited.

A communication apparatus configured to implement a function of the network device 110 may be a network device, or may be an apparatus that can support the network device in implementing the function, for example, a chip system. The apparatus may be installed in the network device or used in conjunction with the network device. In embodiments of this application, the chip system may include a chip, or may include a chip and another discrete device.

In embodiments of this application, the communication system 100 may be the following system: a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G system, a 6G system, or an NTN system like an inter-satellite communication system or a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low-earth orbit satellite, a medium-earth orbit satellite, or a high-earth orbit satellite.

The communication system 100 may alternatively be a terrestrial cellular communication system, a high altitude platform station (high altitude platform station, HAPS) communication system, a V2X system, an integrated access and backhaul (integrated access and backhaul, IAB) system, a reconfigurable intelligent surface (reconfigurable intelligent surface, RIS) communication system, or the like. This is not limited.

In a 5G communication system, application of a massive multiple-input multiple-output (massive multiple-input multiple-output, massive MIMO) technology plays a crucial role in improving a frequency spectrum of the system. When the massive MIMO technology is used, before sending data to a terminal device, a network device sends a channel state information reference signal (channel state information reference signal, CSI-RS) to the terminal device, receives channel state information (channel state information, CSI) fed back by the terminal device, and precodes the data based on the CSI. The CSI includes a channel quality indicator (channel quality indicator, CQI), a precoding matrix indication (precoding matrix indication, PMI), a rank indicator (rank indicator, RI), and the like.

In R16, the terminal device feeds back, in the PMI, a precoding matrix W corresponding to each of a plurality of transport layers. The terminal device feeds back the PMI based on a codebook agreed upon by the terminal device and the network device. A structure of an R16 eType II codebook may be represented as the following formula:

$$\text{W} = W_1 \widetilde{W}_2 W_f^H$$

In the formula, $W_1 \epsilon \mathbb{C}^{P_{CSI-RS} \times 2L}$, is a space domain basis matrix, and represents selecting 2L orthogonal space domain bases from a space domain discrete Fourier transform (discrete Fourier transform, DFT) matrix set, and $P_{CSI-RS}$ is a quantity of antenna ports used by the network device to send the CSI-RS. In the formula, $W_f \epsilon \mathbb{C}^{N_3 \times M_v}$, is a frequency domain basis matrix, and represents selecting $M_v$ orthogonal frequency domain bases from a frequency domain DFT matrix set, $W_f^H$ represents a conjugate transpose matrix of $W_f$, $N_3$ is a quantity of frequency domain resource blocks (resource blocks, RBs) or a quantity of subbands of the network device. In the formula, $\widetilde{W}_2 \epsilon \mathbb{C}^{2L \times M_v}$, and represents $2L \times M_v$ weighting coefficients, and each weighting coefficient corresponds to one space domain basis in $W_1$ and one frequency domain basis in $W_f$.

When feeding back $\bar{W}_2$ in the precoding matrix W corresponding to each transport layer, the terminal device indicates only a part of the $2L \times M_v$ weighting coefficients. Assuming that $K_l^{NZ}$ is a quantity of weighting coefficients actually fed back at an $l^{th}$ transport layer, $K_l^{NZ} < 2L \times M_v$. The terminal device indicates, by using a bitmap (bitmap) whose length is $2L \times M_v$, locations of the fed-back $K_l^{NZ}$ weighting coefficients in $\bar{W}_2$. For example, the $K_l^{NZ}$ weighting coefficients fed back by the terminal device are 1, and remaining $2L \times M_v - K_l^{NZ}$ weighting coefficients are 0.

The terminal device feeds back precoding matrices W of the plurality of transport layers, and $\bar{W}_2$ in the precoding matrix W corresponding to each transport layer has a bitmap (bitmap) whose length is $2L \times M_v$. Therefore, total bit overheads needed by the terminal device for the feedback are $2L \times M_v \times$ *a quantity of transport layers*.

It should be understood that the formula is an example of a representation form of the precoding matrix W corresponding to each transport layer in R16.

CSI in R16 is used to feed back a PMI corresponding to each transport layer of the terminal device. Currently, another manner is mentioned. To be specific, the CSI is used to feed back a channel corresponding to each antenna port of the terminal device, which may also be referred to as full-channel feedback of the terminal device. In this case, the terminal device may still perform feedback according to the formula: $\text{W} = W_1 \widetilde{W}_2 W_f^H$, but a physical meaning of W is the channel corresponding to each of antenna ports of the terminal device. When the terminal device performs full-channel feedback, a quantity of antenna ports of the terminal device may be greater than the quantity of transport layers of the terminal device. Therefore, total bit overheads needed by the terminal device for the feedback increase from $2L \times M_v \times$

*the quantity of transport layers* to $2L \times M_v \times$
*the quantity of antenna ports of the terminal device.*

In conclusion, this application provides a communication method 200, to reduce resource overheads for full-channel feedback. In the communication method 200 provided in this application, a terminal device performs two-stage full-channel feedback. The terminal device feeds back, at a first stage, at least one space-frequency basis group in which all antenna ports of the terminal device have a weighting coefficient in a matrix corresponding to a space domain basis set and a frequency domain basis set, and specifically feeds back, at a second stage, a location at which each antenna port has a weighting coefficient in the at least one space-frequency basis group. In comparison with a conventional technology in which the terminal device needs to report a location at which each antenna port has a weighting coefficient in the matrix corresponding to the space domain basis set and the frequency domain basis set, the resource overheads for the full-channel feedback can be reduced in the communication method 200 provided in this application.

FIG. 2 is a schematic flowchart of a communication method 200 according to an embodiment of this application. It should be noted that, in FIG. 2, a terminal device and a network device are used as execution bodies of interaction illustration to illustrate the method. However, the execution bodies of the interaction illustration are not limited in this application. For example, the terminal device and the network device in FIG. 2 may alternatively be a chip, a chip system, a processor, or the like that supports the terminal device and the network device in implementing the method, or may be a logical node, a logical module, or software that implements all or some functions of the terminal device and the network device. Specifically, the communication method 200 includes the following steps.

Step S212: The terminal device sends first information to the network device, where the first information indicates at least one first space-frequency basis group in a first matrix, and the at least one first space-frequency basis group is a union set of space-frequency basis groups corresponding to respective non-zero coefficients of N antenna ports of the terminal device. Correspondingly, the network device receives the first information from the terminal device.

Specifically, the N antenna ports of the terminal device correspond to the first matrix, the first matrix corresponds to 2L space domain bases and M frequency domain bases, the first matrix includes 2L*M coefficients, each coefficient corresponds to one space-frequency basis group, and each space-frequency basis group includes one space domain basis and one frequency domain basis.

Step S214: The terminal device sends second information to the network device, where the second information indicates a correspondence between the at least one first space-frequency basis group and a non-zero coefficient of each of the N antenna ports. Correspondingly, the network device receives the second information from the terminal device.

For example, the first matrix may be a matrix with four rows and three columns, the first matrix includes 4*3 coefficients, and the at least one first space-frequency basis group may be indicated in the following Table 1 in the first information.

It should be noted that, for ease of understanding the technical solutions of this application, in this embodiment of this application, the first matrix with four rows and three columns is used as an example for description. However, the first matrix in this application is not limited to four rows and three columns, and may be another matrix of any size. This is not limited in this application.

Table 1

| First matrix | (0,0) | (1,0) | (2,0) | (3,0) | (0,1) | (1,1) | (2,1) | (3,1) | (0,2) | (1,2) | (2,2) | (3,2) |
|---|---|---|---|---|---|---|---|---|---|---|---|---|
| At least one first space-frequency basis group | × | × | × | × | × | | | × | | × | × | |

Specifically, the symbol "×" represents a location of a space-frequency basis group with a non-zero coefficient. It can be learned from Table 1 that the at least one first space-frequency basis group indicated by the first information is at eight locations: (0,0), (1,0), (2,0), (3,0), (0,1), (3,1), (1,2), and (2,2) in the first matrix, and a bitmap (bitmap) indicating the eight first space-frequency basis groups may be 111110010110. In other words, the union set of the space-frequency basis groups corresponding to the respective non-zero coefficients of the N antenna ports of the terminal device is the eight locations.

It should be noted that, for ease of understanding the technical solutions of this application, in this embodiment of this application, that a quantity of the at least one first frequency domain basis group is 8 is used for description. However, the quantity of the at least one first frequency domain basis group in this application may be another value. This is not limited in this application.

Further, the correspondence between the at least one first space-frequency basis group and the non-zero coefficient of each of the N antenna ports may be indicated in the following Table 2 in the second information.

Table 2

| At least one first space-frequency basis group | (0,0) | (1,0) | (2,0) | (3,0) | (0,1) | (3,1) | (1,2) | (2,2) |
|---|---|---|---|---|---|---|---|---|
| Antenna port 1 | × | × | | × | | × | × | × |
| Antenna port 2 | × | | × | × | | × | × | × |
| ... | | × | × | × | × | × | | |
| Antenna port N | × | | × | × | × | × | × | |

Specifically, the symbol "×" represents a location of a space-frequency basis group with a non-zero coefficient. It can be learned from Table 2 that, the antenna port 1 has non-zero coefficients at six locations: (0,0), (1,0), (3,0), (3,1), (1,2), and (2,2) in the eight first space-frequency basis groups, and a bitmap (bitmap) indicating a correspondence between the antenna port 1 and the eight first space-frequency basis groups may be 11010111; the antenna port 2 has non-zero coefficients at six locations: (0,0), (2,0), (3,0), (3,1), (1,2), and (2,2) in the eight first space-frequency basis groups, and a bitmap (bitmap) indicating a correspondence between the antenna port 2 and the eight first space-frequency basis groups may be 10110111; ...; and the antenna port N has non-zero coefficients at six locations: (0,0), (2,0), (3,0), (0,1), (3,1), and (1,2) in the eight first space-frequency basis groups, and a bitmap (bitmap) indicating a correspondence between the antenna port 1 and the eight first space-frequency basis groups may be 10111110.

It should be noted that in this embodiment of this application, "1" represents a non-zero coefficient, and "0" represents a zero coefficient; or "0" may represent a non-zero coefficient, and "1" may represent a zero coefficient; or the like. This is not limited in this application.

Specifically, the first information and/or the second information may be carried in CSI.

Optionally, before step S212, the method may further include step S210: The network device sends fifth information to the terminal device, where the fifth information indicates the quantity of the at least one first space-frequency basis group. Correspondingly, the terminal device receives the fifth information from the network device.

It should be understood that, if step S210 is not performed before step S212, the quantity of the at least one first space domain basis group is determined by the terminal device. Specifically, the terminal device may separately report the quantity of the at least one first space domain basis group, or the terminal device may implicitly indicate the quantity of the at least one first space domain basis group by using the first information.

It should be understood that, if step S210 is performed before step S212, the first information and the second information may be of a fixed length indicated by the network device. In this case, the first information may be carried in a CSI part 1, and the second information is carried in a CSI part 2; or both the first information and the second information may be carried in a CSI part 1; or both the first information and the second information may be carried in a CSI part 2. This is not limited in this application. If step S210 is not performed before step S212, the first information and the second information are determined by the terminal device, and the first information is of a fixed length, but a length of the second information is not fixed. In this case, the first information may be carried in a CSI part 1, and the second information may be carried in a CSI part 2; or both the first information and the second information may be carried in a CSI part 2.

For example, this application may further provide a method for indicating the at least one first space-frequency basis group by the terminal device. Specifically, the terminal device may indicate the at least one first space-frequency basis group according to the following formula 1:

$$\mathrm{Pri}(i, f) = 2L\pi(f) + i \quad \text{Formula 1}$$

2L is a quantity of space domain bases, a value range of f is $0 \leq f \leq M$, a value range of i is $0 \leq i \leq 2L$, and a value of Pri(i, f) indicates a ranking of a space-frequency basis group corresponding to a space domain basis i and a frequency domain basis f. $\pi(f)$ is a function predefined in a protocol, and for different f, $\pi(f)$ is integers with different values.

For example, $\pi(f) = f$, or $\pi(f) = \min\left(2 \cdot n_3^{(f)}, 2 \cdot \left(N_3 - n_3^{(f)}\right) - 1\right)$, where $N_3$ is a total quantity of delays, and $n_3^{(f)}$ is a sequence number of a selected f$^{th}$ delay (for example, $N_3=6$, M=3, and assuming that three delays: 0, 1, and 5 are selected from delays whose sequence numbers are 0, 1, 2, 3, 4, and 5, $n_3^{(0)} = 0$, $n_3^{(1)} = 1$, and $n_3^{(2)} = 5$).

For example, a smaller value of Pri(i, f) indicates that the space-frequency basis group corresponding to the space domain basis i and the frequency domain basis f is preferentially indicated in a bitmap (bitmap). For example, if Pri(0,0) = 0, (0,0) corresponds to a 1$^{st}$ bit in the bitmap (bitmap); if Pri(1,0) = 1, (1,0) corresponds to a 2$^{nd}$ bit in the bitmap (bitmap); if Pri(2,0) = 2, (2,0) corresponds to a 3$^{rd}$ bit in the bitmap (bitmap); if Pri(3,0) = 3, (3,0) corresponds to a 4$^{th}$ bit in the bitmap (bitmap); if Pri(0,1) = 4, (0,1) corresponds to a 5$^{th}$ bit in the bitmap (bitmap); .... By analogy, the eight first space-frequency basis groups: (0,0), (1,0), (2,0), (3,0), (0,1), (3,1), (1,2), and (2,2) in 2L*M=12 bits may be indicated.

Further, this application may provide a method for indicating a location of the non-zero coefficient of each of the N antenna ports by the terminal device. Specifically, the terminal device may indicate a ranking of the non-zero coefficient of each of the N antenna ports according to the following formula 2:

$$\mathrm{Pri}(n, i, f) = 2LN\pi(f) + Ni + n \quad \text{Formula 2}$$

2L is the quantity of space domain bases, a value range of f is $0 \leq f \leq M$, a value range of i is $0 \leq i \leq 2L$, a value range of n is $1 \leq n \leq N$ or a value range of n is $0 \leq n \leq N-1$, and a value of Pri(n, i, f) indicates a ranking of a non-zero coefficient that is of an antenna port n in the N antenna ports and that corresponds to the space-frequency basis group of the space domain basis i and the frequency domain basis f. $\pi(f)$ is the function predefined in the protocol, and for different f, $\pi(f)$ is integers with different values.

For example, a smaller value of Pri(n, i, f) indicates that the coefficient that is of the antenna port n and that corresponds to the space-frequency basis group of the space domain basis i and the frequency domain basis f is preferentially indicated in the bitmap (bitmap). For example, it is assumed that N=2, and the value range of n is $1 \leq n \leq N$. If Pri(1,0,0) = 1, (1,0,0) corresponds to a $1^{st}$ bit in the bitmap (bitmap); if Pri(2,0,0) = 2, (2,0,0) corresponds to a $2^{nd}$ bit in the bitmap (bitmap); if Pri(1,1,0) = 3, (1,1,0) corresponds to a $3^{rd}$ bit in the bitmap (bitmap); if Pri(2,1,0) = 4, (2,1,0) corresponds to a $4^{th}$ bit in the bitmap (bitmap); if Pri(1,2,0) = 5, (1,2,0) corresponds to a $5^{th}$ bit in the bitmap (bitmap); if Pri(2,2,0) = 6, (2,2,0) corresponds to a $6^{th}$ bit in the bitmap (bitmap); if Pri(1,3,0) = 7, (1,3,0) corresponds to a $7^{th}$ bit in the bitmap (bitmap); if Pri(2,3,0) = 8, (2,3,0) corresponds to an $8^{th}$ bit in the bitmap (bitmap); .... By analogy, locations at which the antenna port 1 and the antenna port 2 each have non-zero coefficients in bits corresponding to the eight first space-frequency basis groups may be indicated. For example, the bitmap (bitmap) may be 1110011100111111.

It should be noted that values of the space domain basis i and the frequency domain basis f in the formula 2 are space domain bases i and frequency domain bases f corresponding to the eight first space domain basis groups. In other words, the values of the space domain basis i and the frequency domain basis f in the formula 2 are not necessarily all values in the value ranges of i and f. Optionally, if step S210 is performed in the communication method 200, and the quantity (X) of the at least one first space domain basis group indicated by the network device is less than the quantity (Y) of the at least one first space domain basis group determined by the terminal device, the terminal device selects X first space domain basis groups with a high non-zero coefficient from the determined Y first space domain basis groups, and indicates the X first space domain basis groups with the high non-zero coefficient to the network device by using the first information.

According to the communication method 200, the terminal device performs two-stage full-channel feedback, to reduce resource overheads for the full-channel feedback.

This application may further provide another communication method 300, to reduce resource overheads for full-channel feedback. In the communication method 300 provided in this application, a terminal device performs two-stage full-channel feedback. The terminal device feeds back, at a first stage, at least one space-frequency basis group in which all antenna ports of the terminal device have a weighting coefficient in a matrix corresponding to a space domain basis set and a frequency domain basis set, and specifically feeds back, at a second stage, a location, other than the at least one space-frequency basis group, at which each antenna port has a weighting coefficient in the matrix corresponding to the space domain basis set and the frequency domain basis set. In comparison with a conventional technology in which the terminal device needs to report a location at which each antenna port has a weighting coefficient in the matrix corresponding to the space domain basis set and the frequency domain basis set, the resource overheads for the full-channel feedback can be reduced in the communication method 300 provided in this application.

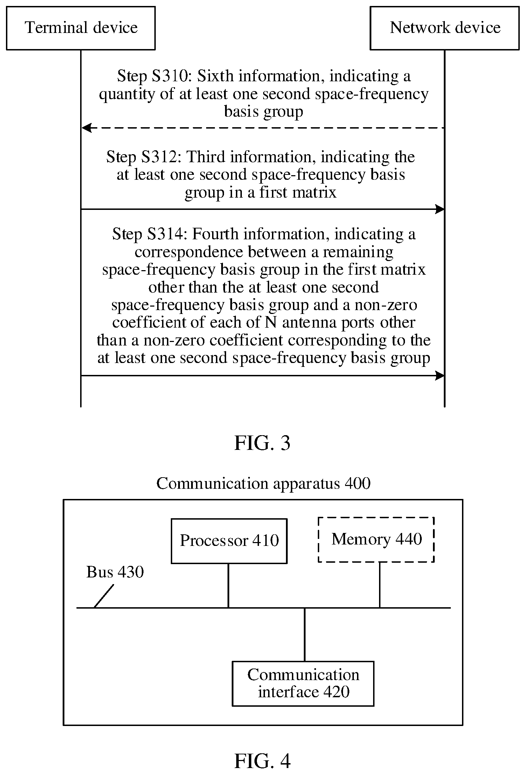

FIG. 3 is a schematic flowchart of a communication method 300 according to an embodiment of this application. It should be noted that, in FIG. 3, a terminal device and a network device are used as execution bodies of interaction illustration to illustrate the method. However, the execution bodies of the interaction illustration are not limited in this application. For example, the terminal device and the network device in FIG. 3 may alternatively be a chip, a chip system, a processor, or the like that supports the terminal device and the network device in implementing the method, or may be a logical node, a logical module, or software that implements all or some functions of the terminal device and the network device. Specifically, the communication method 300 includes the following steps.

Step S312: The terminal device sends third information to the network device, where the third information indicates at least one second space-frequency basis group in a first matrix, and the at least one second space-frequency basis group is an intersection set of space-frequency basis groups corresponding to respective non-zero coefficients of N antenna ports of the terminal device. Correspondingly, the network device receives the third information from the terminal device.

Specifically, the N antenna ports of the terminal device correspond to the first matrix, the first matrix corresponds to 2L space domain bases and M frequency domain bases, the first matrix includes 2L*M coefficients, each coefficient corresponds to one space-frequency basis group, and each space-frequency basis group includes one space domain basis and one frequency domain basis.

Step S314: The terminal device sends fourth information to the network device, where the fourth information indicates a correspondence between a remaining space-frequency basis group in the first matrix other than the at least one second space-frequency basis group and a non-zero coefficient of each of the N antenna ports other than a non-zero coefficient corresponding to the at least one second space-frequency basis group. Correspondingly, the network device receives the fourth information from the terminal device.

For example, the first matrix may be a matrix with four rows and three columns, the first matrix includes 4*3 coefficients, and the at least one second space-frequency basis group may be indicated in the following Table 3 in the third information.

Table 3

| First matrix | (0,0) | (1,0) | (2,0) | (3,0) | (0,1) | (1,1) | (2,1) | (3,1) | (0,2) | (1,2) | (2,2) | (3,2) |
|---|---|---|---|---|---|---|---|---|---|---|---|---|
| At least one second space-frequency basis group | | × | × | × | | | | × | | × | × | |

Specifically, the symbol "×" represents a location of a space-frequency basis group with a non-zero coefficient. It can be learned from Table 3 that the at least one second space-frequency basis group indicated by the third information is at six locations: (1,0), (2,0), (3,0), (3,1), (1,2), and (2,2) in the first matrix, and a bitmap (bitmap) indicating the six second space-frequency basis groups may be 011100010110. In other words, the intersection set of the space-frequency basis groups corresponding to the non-zero coefficients respectively corresponding to the N antenna ports of the terminal device is the six locations.

It should be noted that, for ease of understanding the technical solutions of this application, in this embodiment of this application, that a quantity of the at least one second frequency domain basis group is 6 is used for description. However, the quantity of the at least one second frequency domain basis group in this application may be another value. This is not limited in this application.

Further, the correspondence between the remaining space-frequency basis group in the first matrix other than the at least one second space-frequency basis group and the non-zero coefficient of each of the N antenna ports other than the non-zero coefficient corresponding to the at least one second space-frequency basis group may be indicated in the following Table 4 in the fourth information.

Table 4

| Remaining space-frequency basis group in the first matrix other than the at least one second space-frequency basis group | (0,0) | (0,1) | (1,1) | (2,1) | (0,2) | (3,2) |
|---|---|---|---|---|---|---|
| Antenna port 1 | × | | × | | × | × |
| Antenna port 2 | | | × | | | × |
| ... | | | | | × | |
| Antenna port N | × | × | | | | |

Specifically, the symbol "×" represents a location of a space-frequency basis group with a non-zero coefficient. It can be learned from Table 4 that remaining space-frequency basis groups in the first matrix other than the at least one second space-frequency basis group are six locations: (0,0), (0,1), (1,1), (2,1), (0,2), and (3,2). In addition to non-zero coefficients in the six second space-frequency basis groups, the antenna port 1 further has non-zero coefficients at the four locations: (0,0), (1,1), (0,2), and (3,2) in the six locations, and a bitmap (bitmap) indicating a correspondence between the six locations and the non-zero coefficients of the antenna port 1 other than the non-zero coefficients corresponding to the six second space-frequency basis groups may be 101011; in addition to non-zero coefficients in the six second space-frequency basis groups, the antenna port 2 further has non-zero coefficients at the two locations: (1,1) and (3,2) in the six locations, and a bitmap (bitmap) indicating a correspondence between the six locations and the non-zero coefficients of the antenna port 2 other than the non-zero coefficients corresponding to the six second space-frequency basis groups may be 001001; ...; and in addition to non-zero coefficients in the six second space-frequency basis groups, the antenna port N further has non-zero coefficients at the two locations: (0,0) and (0,1) in the six locations, and a bitmap (bitmap) indicating a correspondence between the six locations and the non-zero coefficients of the antenna port N other than the non-zero coefficients corresponding to the six second space-frequency basis groups may be 110000.

It should be noted that in this embodiment of this application, "1" represents a non-zero coefficient, and "0" represents a zero coefficient; or "0" may represent a non-zero coefficient, and "1" may represent a zero coefficient; or the like. This is not limited in this application.

Specifically, the third information and/or the fourth information may be carried in CSI.

Optionally, before step S312, the method may further include step S310: The network device sends sixth information to the terminal device, where the sixth information indicates the quantity of the at least one second space-frequency basis group. Correspondingly, the terminal device receives the sixth information from the network device.

It should be understood that, if step S310 is not performed before step S312, the quantity of the at least one second space domain basis group is determined by the terminal device. Specifically, the terminal device may separately report the quantity of the at least one first space domain basis group, or the terminal device may implicitly indicate the quantity of the at least one second space domain basis group by using the third information.

It should be understood that, if step S310 is performed before step S312, the third information and the fourth information may be of a fixed length indicated by the network device. In this case, the third information may be carried in a CSI part 1, and the fourth information is carried in a CSI part 2; or both the third information and the fourth information may be carried in a CSI part 1; or both the third information and the fourth information may be carried in a CSI part 2. This is not limited in this application. If step S310 is not performed before step S312, the third information and the third information are determined by the terminal device, and the third information is of a fixed length, but a length of the fourth information is not fixed. In this case, the third information may be carried in a CSI part 1, and the fourth information may be carried in a CSI part 2; or both the third information and the fourth information may be carried in a CSI part 2.

For example, this application may further provide a method for determining the at least one second space-frequency basis group by the terminal device. Specifically, the terminal device may determine the at least one second space-frequency basis group according to the following formula 1:

$$\mathrm{Pri}(i, f) = 2L\pi(f) + i \ \text{Formula 1}$$

$2L$ is a quantity of space domain bases, a value range of f is $0 \le f \le M$, a value range of i is $0 \le i \le 2L$, and a value of Pri(i, f) indicates a ranking of a space-frequency basis group corresponding to a space domain basis i and a frequency domain basis f. $\pi(f)$ is a function predefined in a protocol, and for different f, $\pi(f)$ is integers with different values.

For example, a smaller value of Pri(i, f) indicates that the space-frequency basis group corresponding to the space domain basis i and the frequency domain basis f is preferentially indicated in a bitmap (bitmap). For example, if Pri(0,0) = 0, (0,0) corresponds to a 1st bit in the bitmap (bitmap); if Pri(1,0) = 1, (1,0) corresponds to a 2nd bit in the bitmap (bitmap); if Pri(2,0) = 2, (2,0) corresponds to a 3rd bit in the bitmap (bitmap); if Pri(3,0) = 3, (3,0) corresponds to a 4th bit in the bitmap (bitmap); if Pri(0,1) = 4, (0,1) corresponds to a 5th bit in the bitmap (bitmap); .... By analogy, the six second space-frequency basis groups: (1,0), (2,0), (3,0), (3,1), (1,2), and (2,2) in 2L*M=12 bits may be indicated.

Further, this application may provide a method for indicating, by the terminal device, a ranking of the non-zero coefficient of each of the N antenna ports other than the non-zero coefficient corresponding to the at least one second space-frequency basis group. Specifically, the terminal device may indicate, according to the following formula 2, the ranking of the non-zero coefficient of each of the N antenna ports other than the non-zero coefficient corresponding to the at least one second space-frequency basis group:

$$\mathrm{Pri}(n, i, f) = 2LN\pi(f) + Ni + n \ \text{Formula 2}$$

$2L$ is the quantity of space domain bases, a value range of f is $0 \le f \le M$, a value range of i is $0 \le i \le 2L$, a value range of n is $1 \le n \le N$, and a value of Pri(n, i, f) indicates a ranking of a non-zero coefficient that is of an antenna port n in the N antenna ports and that corresponds to the space-frequency basis group of the space domain basis i and the frequency domain basis f. $\pi(f)$ is the function predefined in the protocol, and for different f, $\pi(f)$ is integers with different values.

For example, a smaller value of Pri(n, i, f) indicates that the coefficient that is of the antenna port n and that corresponds to the space-frequency basis group of the space domain basis i and the frequency domain basis f is preferentially indicated in the bitmap (bitmap). For example, it is assumed that N=2, and the value range of n is $1 \le n \le N$. If Pri(1,0,0) = 1, (1,0,0) corresponds to a 1st bit in the bitmap (bitmap); if Pri(2,0,0) = 2, (2,0,0) corresponds to a 2nd bit in the bitmap (bitmap); if Pri(1,0,1) = 3, (1,0,1) corresponds to a 3rd bit in the bitmap (bitmap); if Pri(2,0,1) = 4, (2,0,1) corresponds to a 4th bit in the bitmap (bitmap); if Pri(1,1,1) = 5, (1,1,1) corresponds to a 5th bit in the bitmap (bitmap); if Pri(2,1,1) = 6, (2,1,1) corresponds to a 6th bit in the bitmap (bitmap); if Pri(1,2,1) = 7, (1,2,1) corresponds to a 7th bit in the bitmap (bitmap); if Pri(2,2,1) = 8, (2,2,1) corresponds to an 8th bit in the bitmap (bitmap); .... By analogy, locations at which the antenna port 1 and the antenna port 2 each have non-zero coefficients at the six locations in the first matrix other than the non-zero coefficients corresponding to the six second space-frequency basis groups may be indicated. For example, the bitmap (bitmap) may be 100011001011.

It should be noted that values of the space domain basis i and the frequency domain basis f in the formula 2 are a space domain basis i and a frequency domain basis f in the first matrix other than space domain bases i and frequency domain bases f corresponding to the six second space domain basis groups. In other words, the values of the space domain basis i and the frequency domain basis f in the formula 2 are not necessarily all values in the value ranges of i and f.

Optionally, if step S310 is performed in the communication method 300, and the quantity (O) of the at least one second space-frequency basis group indicated by the network device is less than the quantity (P) of the at least one second space-frequency basis group determined by the terminal device, the terminal device selects O second space-frequency basis groups with a high non-zero coefficient from the determined P second space-frequency basis groups, and indicates the O second space-frequency basis groups with the high non-zero coefficient to the network device by using the third information.

According to the communication method 300, the terminal device performs two-stage full-channel feedback, to reduce resource overheads for the full-channel feedback.

The terminal device may select the communication method 200 or the communication method 300 based on an actual parameter of a channel for reporting. For example, if the union set of the space-frequency basis groups corresponding to the respective non-zero coefficients of the N antenna ports of the terminal device occupies a small quantity of locations in the first matrix, the terminal device may select the communication method 200. If the intersection set of the space-frequency basis groups corresponding to the respective non-zero coefficients of the N antenna ports of the terminal device occupies a large quantity of locations in the first matrix, the terminal device may select the communication method 300. This is not limited in this application.

Finally, apparatus embodiments in embodiments of this application are described.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 4 is a block diagram of a communication apparatus 400 according to an embodiment of this application. The communication apparatus 400 includes a processor 410 and a communication interface 420. Optionally, the processor 410 and the communication interface 420 may be connected to each other through a bus 430. The communication apparatus 400 may be a terminal device, or may be a network device.

Optionally, the communication apparatus 400 may further include a memory 440. The memory 440 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 440 is configured to store related instructions and data.

The processor 410 may be one or more central processing units (central processing units, CPUs). When the processor 410 is one CPU, the CPU may be a single-core CPU or may be a multi-core CPU.

When the communication apparatus 400 is the terminal device, for example, the communication apparatus 400 is configured to perform the following operation: sending first information.

When the communication apparatus 400 is the network device, for example, the communication apparatus 400 is configured to perform the following operation: receiving first information from the terminal device.

The content is merely used as an example for description. When the communication apparatus 400 is the terminal device/network device, the communication apparatus 400 is responsible for performing methods or steps related to the terminal device/network device in the foregoing method embodiments.

The foregoing descriptions are merely examples for description. For specific content, refer to the content shown in the foregoing method embodiments. For implementations of the operations in FIG. 4, refer to corresponding descriptions in the method embodiments shown in FIG. 2 and FIG. 3.

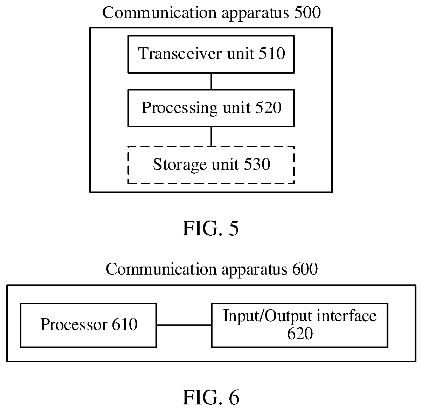

FIG. 5 is a block diagram of a communication apparatus 500 according to an embodiment of this application. The communication apparatus 500 may be a terminal device or a network device, or may be a chip or a module in the terminal device or the network device, and is configured to implement the methods in the foregoing embodiments. The communication apparatus 500 includes a transceiver unit 510. The following describes the transceiver unit 510 and the processing unit 520 by using examples.

The transceiver unit 510 may include a sending unit and a receiving unit. The sending unit is configured to perform a sending action of the communication apparatus 500, and the receiving unit is configured to perform a receiving action of the communication apparatus 500. For ease of description, in this embodiment of this application, the sending unit and the receiving unit are combined into one transceiver unit. A unified description is provided herein, and details are not described below again.

When the communication apparatus 500 is the terminal device, for example, the transceiver unit 510 sends first information, and the processing unit 520 is configured to determine the first information.

When the communication apparatus 500 is the network device, for example, the transceiver unit 510 is configured to receive first information from the terminal device.

The content is merely used as an example for description. When the communication apparatus 500 is the terminal device or the network device, the communication apparatus 500 is responsible for performing methods or steps related to the terminal device or the network device in the foregoing method embodiments.

Optionally, the communication apparatus 500 further includes a storage unit 530, and the storage unit 530 is configured to store a program or code used to perform the foregoing methods.

The apparatus embodiments shown in FIG. 4 and FIG. 5 are used to implement the content described in FIG. 2 and FIG. 3. For specific execution steps and methods of the apparatuses shown in FIG. 4 and FIG. 5, refer to the content described in the foregoing method embodiments.

FIG. 6 is a block diagram of a communication apparatus 600 according to an embodiment of this application. The communication apparatus 600 is configured to implement a function of a terminal device/network device. The communication apparatus 600 may be a chip in the terminal device/network device.

The communication apparatus 600 includes an input/output interface 620 and a processor 610. The input/output interface 620 may be an input/output circuit. The processor 610 may be a signal processor, a chip, or another integrated circuit that can implement the methods in this application. The input/output interface 620 is configured to input or output a signal or data.

For example, when the communication apparatus 600 is the terminal device, the input/output interface 620 is configured to send first information, and the processor 610 is configured to determine the first information.

For example, when the communication apparatus 600 is the network device, the input/output interface 620 is configured to receive first information from the terminal device.

In a possible implementation, the processor 610 executes instructions stored in a memory, to implement the function implemented by the terminal device or the network device.

Optionally, the communication apparatus 600 further includes the memory.

Optionally, the processor and the memory are integrated together.

Optionally, the memory is outside the communication apparatus 600.

In a possible implementation, the processor 610 may be a logic circuit, and the processor 610 inputs/outputs a message or signaling through the input/output interface 620. The logic circuit may be a signal processor, a chip, or another integrated circuit that can implement the methods in embodiments of this application.

The foregoing descriptions of the communication apparatus 600 are merely an example for description. The communication apparatus 600 can be configured to perform the methods in the foregoing embodiments. For specific content, refer to the descriptions in the foregoing method embodiments. Details are not described herein again.

This application further provides a chip, including a processor, configured to invoke instructions from a memory and run the instructions stored in the memory, to enable a communication device on which the chip is installed to perform the methods in the foregoing examples.

This application further provides a chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor, configured to couple to a memory, and configured to perform the method and the function of the network device or the terminal device in any one of the foregoing embodiments.

This application provides a computer program product including instructions. When the computer program product runs on a computer, the methods in the foregoing embodiments are implemented.

This application further provides a computer program. When the computer program is run on a computer, the methods in the foregoing embodiments are implemented.

This application further provides a computer-readable storage medium. The computer-readable storage medium stores a computer program. When the computer program is executed by a computer, the methods in the foregoing embodiments are implemented.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, the disclosed system, apparatus, and method may be implemented in another manner. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the technical solutions of embodiments of this application.

In addition, functional units in embodiments of this application may be integrated into one processing unit, or each unit may exist alone physically, or two or more units may be integrated into one unit.

If functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the method embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A communication method, wherein N antenna ports of a first communication apparatus correspond to a first matrix, the first matrix corresponds to 2L space domain bases and M frequency domain bases, the first matrix comprises 2L*M coefficients, each coefficient corresponds to one space-frequency basis group, each space-frequency basis group comprises one space domain basis and one frequency domain basis, and the method comprises:

    sending, by the first communication apparatus, first information to a network device, wherein the first information indicates at least one first space-frequency basis group in the first matrix, and the at least one first space-frequency basis group is a union set of space-frequency basis groups corresponding to respective non-zero coefficients of the N antenna ports; and
    sending, by the first communication apparatus, second information to the network device, wherein the second information indicates a correspondence between the at least one first space-frequency basis group and a non-zero coefficient of each of the N antenna ports, wherein
    2L, M, and N are all positive integers greater than or equal to 1.

2.  The method according to claim 1, wherein the first information and/or the second information are/is carried in channel state information CSI.

3.  The method according to claim 1 or 2, wherein the method further comprises:
    receiving, by the first communication apparatus, fifth information from the network device, wherein the fifth information indicates a quantity of the at least one first space-frequency basis group.

4.  The method according to any one of claims 1 to 3, wherein the at least one first space-frequency basis group is indicated by the following formula:

$$\mathrm{Pri(i, f)} = 2\mathrm{L}\pi(\mathrm{f}) + \mathrm{i}$$

    wherein 2L is a quantity of space domain bases, a value range of f is $0 \leq f \leq M$, a value range of i is $0 \leq i \leq 2L$, and a value of Pri(i, f) indicates a ranking of a space-frequency basis group corresponding to a space domain basis i and a frequency domain basis f.

5.  The method according to any one of claims 1 to 4, wherein the non-zero coefficient of each of the N antenna ports is indicated by the following formula:

$$\mathrm{Pri(n, i, f)} = 2\mathrm{LN}\pi(\mathrm{f}) + \mathrm{Ni} + \mathrm{n}$$

wherein 2L is the quantity of space domain bases, a value range of f is 0≤f≤M, a value range of i is 0≤i≤2L, a value range of n is 1≤n≤N, and a value of Pri(n, i, f) indicates a ranking of a non-zero coefficient that is of an antenna port n in the N antenna ports and that corresponds to the space-frequency basis group of the space domain basis i and the frequency domain basis f.

6.  A communication method, wherein N antenna ports of a first communication apparatus correspond to a first matrix, the first matrix corresponds to 2L space domain bases and M frequency domain bases, the first matrix comprises 2L*M coefficients, each coefficient corresponds to one space-frequency basis group, each space-frequency basis group comprises one space domain basis and one frequency domain basis, and the method comprises:

    sending, by the first communication apparatus, third information to a network device, wherein the third information indicates at least one second space-frequency basis group in the first matrix, and the at least one second space-frequency basis group is an intersection set of space-frequency basis groups corresponding to respective non-zero coefficients of the N antenna ports; and

    sending, by the first communication apparatus, fourth information to the network device, wherein the fourth information indicates a correspondence between a remaining space-frequency basis group in the first matrix other than the at least one second space-frequency basis group and a non-zero coefficient of each of the N antenna ports other than a non-zero coefficient corresponding to the at least one second space-frequency basis group, wherein

    2L, M, and N are all positive integers greater than or equal to 1.

7.  The method according to claim 6, wherein the third information and/or the fourth information are/is carried in channel state information CSI.

8.  The method according to claim 6 or 7, wherein the method further comprises:
    receiving, by the first communication apparatus, sixth information from the network device, wherein the sixth information indicates a quantity of the at least one second space-frequency basis group.

9.  The method according to any one of claims 6 to 8, wherein a ranking of the at least one second space-frequency basis group is indicated by the following formula:

$$\mathrm{Pri}(i, f) = 2L\pi(f) + i$$

    wherein 2L is a quantity of space domain bases, a value range of f is 0≤f≤M, a value range of i is 0≤i≤2L, and a value of Pri(i, f) indicates a ranking of a space-frequency basis group corresponding to a space domain basis i and a frequency domain basis f.

10. The method according to any one of claims 6 to 9, wherein a ranking of the non-zero coefficient of each of the N antenna ports other than the non-zero coefficient corresponding to the at least one second space-frequency basis group is indicated by the following formula:

$$\mathrm{Pri}(n, i, f) = 2LN\pi(f) + Ni + n$$

    wherein 2L is the quantity of space domain bases, a value range of f is 0≤f≤M, a value range of i is 0≤i≤2L, a value range of n is 1≤n≤N, and a value of Pri(n, i, f) indicates a ranking of a non-zero coefficient that is of an antenna port n in the N antenna ports and that corresponds to the space-frequency basis group of the space domain basis i and the frequency domain basis f.

11. A communication method, wherein the method comprises:

    receiving, by a second communication apparatus, first information from a terminal device, wherein the first information indicates at least one first space-frequency basis group in a first matrix, the at least one first space-frequency basis group is a union set of space-frequency basis groups corresponding to respective non-zero coefficients of N antenna ports of the terminal device, the first matrix corresponds to 2L space domain bases and M frequency domain bases, the first matrix comprises 2L*M coefficients, each coefficient corresponds to one space-frequency basis group, each space-frequency basis group comprises one space domain basis and one frequency domain basis, and the N antenna ports of the terminal device correspond to the first matrix; and receiving, by the second communication apparatus, second information from the terminal device, wherein the second information indicates a correspondence between the at least one first space-frequency basis group and a non-zero coefficient of each of the N antenna ports, wherein

2L, M, and N are all positive integers greater than or equal to 1.

12. The method according to claim 11, wherein the first information and/or the second information are/is carried in channel state information CSI.

13. The method according to claim 11 or 12, wherein the method further comprises:
sending, by the second communication apparatus, fifth information to the terminal device, wherein the fifth information indicates a quantity of the at least one first space-frequency basis group.

14. A communication method, wherein the method comprises:

receiving, by a second communication apparatus, third information from a terminal device, wherein the third information indicates at least one second space-frequency basis group in a first matrix, the at least one second space-frequency basis group is an intersection set of space-frequency basis groups corresponding to respective non-zero coefficients of N antenna ports of the terminal device, the first matrix corresponds to 2L space domain bases and M frequency domain bases, the first matrix comprises 2L*M coefficients, each coefficient corresponds to one space-frequency basis group, each space-frequency basis group comprises one space domain basis and one frequency domain basis, and the N antenna ports of the terminal device correspond to the first matrix; and receiving, by the second communication apparatus, fourth information from the terminal device, wherein the fourth information indicates a correspondence between a remaining space-frequency basis group in the first matrix other than the at least one second space-frequency basis group and a non-zero coefficient of each of the N antenna ports other than a non-zero coefficient corresponding to the at least one second space-frequency basis group, wherein

2L, M, and N are all positive integers greater than or equal to 1.

15. The method according to claim 14, wherein the third information and/or the fourth information are/is carried in channel state information CSI.

16. The method according to claim 14 or 15, wherein the method further comprises:
sending, by the second communication apparatus, sixth information to the terminal device, wherein the sixth information indicates a quantity of the at least one second space-frequency basis group.

17. A communication apparatus, comprising a processor, wherein the processor is configured to execute a computer program or instructions,
to enable the communication apparatus to perform the method according to any one of claims 1 to 5, or enable the communication apparatus to perform the method according to any one of claims 6 to 10.

18. A communication apparatus, comprising a processor, wherein the processor is configured to execute a computer program or instructions,
to enable the communication apparatus to perform the method according to any one of claims 11 to 13, or enable the communication apparatus to perform the method according to any one of claims 14 to 16.

19. The communication apparatus according to claim 17 or 18, wherein the communication apparatus further comprises a memory, and the memory is configured to store the computer program or the instructions.

20. The communication apparatus according to claim 17 or 18, wherein the communication apparatus further comprises a communication interface, and the communication interface is configured to input and/or output a signal.

21. A computer-readable storage medium, wherein the computer-readable storage medium stores a computer program or instructions, and when the computer program or the instructions are run on a computer,

the method according to any one of claims 1 to 5 is performed;
the method according to any one of claims 6 to 10 is performed;
the method according to any one of claims 11 to 13 is performed; or

the method according to any one of claims 14 to 16 is performed.

**22.** A computer program product, comprising instructions, wherein when the instructions are run on a computer,

the method according to any one of claims 1 to 5 is performed;
the method according to any one of claims 6 to 10 is performed;
the method according to any one of claims 11 to 13 is performed; or
the method according to any one of claims 14 to 16 is performed.

FIG. 1

Step S210: Fifth information,
indicating a quantity of at least one
first space-frequency basis group

Step S212: First information, indicating
the at least one first space-frequency basis
group in a first matrix

Step S214: Second information,
indicating a correspondence between the
at least one first space-frequency basis
group and a non-zero coefficient of each
of N antenna ports

FIG. 2

Terminal device

Network device

Step S310: Sixth information, indicating a quantity of at least one second space-frequency basis group

Step S312: Third information, indicating the at least one second space-frequency basis group in a first matrix

Step S314: Fourth information, indicating a correspondence between a remaining space-frequency basis group in the first matrix other than the at least one second space-frequency basis group and a non-zero coefficient of each of N antenna ports other than a non-zero coefficient corresponding to the at least one second space-frequency basis group

FIG. 3

Communication apparatus 400

Processor 410

Memory 440

Bus 430

Communication interface 420

FIG. 4

Communication apparatus 500

Transceiver unit 510

Processing unit 520

Storage unit 530

FIG. 5

Communication apparatus 600

Processor 610

Input/Output interface 620

FIG. 6

## INTERNATIONAL SEARCH REPORT

| International application No. |
| --- |
| **PCT/CN2024/117868** |

**A. CLASSIFICATION OF SUBJECT MATTER**

H04B7/06(2006.01)i; H04B7/0456(2017.01)i

According to International Patent Classification (IPC) or to both national classification and IPC

**B. FIELDS SEARCHED**

Minimum documentation searched (classification system followed by classification symbols)

IPC:H04B,H04W,H04L

Documentation searched other than minimum documentation to the extent that such documents are included in the fields searched

Electronic data base consulted during the international search (name of data base and, where practicable, search terms used)

CNTXT, ENTXT, ENTXTC, VEN, VCN, DWPI, 3GPP: 端口, 矩阵, 空域, 频域, 空频, 系数, 非零, 指示, 上报, 报告, 关系, 关联, 映射, port, matrix, spatial domain, frequency domain, spatial frequency, coefficient, non-zero, NZC, indicate, report, relation, association, mapping

**C. DOCUMENTS CONSIDERED TO BE RELEVANT**

| Category* | Citation of document, with indication, where appropriate, of the relevant passages | Relevant to claim No. |
| --- | --- | --- |
| A | CN 115706597 A (HUAWEI TECHNOLOGIES CO., LTD.) 17 February 2023 (2023-02-17) claims 25-29, and description, paragraphs 5-30 and 273-302 | 1-22 |
| A | CN 112187324 A (DATANG MOBILE COMMUNICATIONS EQUIPMENT CO., LTD.) 05 January 2021 (2021-01-05) entire document | 1-22 |
| A | CN 113632398 A (ALCATEL-LUCENT SHANGHAI BELL CO., LTD. et al.) 09 November 2021 (2021-11-09) entire document | 1-22 |
| A | CN 116095742 A (VIVO MOBILE COMMUNICATION CO., LTD.) 09 May 2023 (2023-05-09) entire document | 1-22 |
| A | CN 115706634 A (HUAWEI TECHNOLOGIES CO., LTD.) 17 February 2023 (2023-02-17) entire document | 1-22 |
| A | US 2019334587 A1 (SAMSUNG ELECTRONICS CO., LTD.) 31 October 2019 (2019-10-31) the whole document | 1-22 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 November 2024** | **21 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/117868**

| Patent document cited in search report | | | Publication date (day/month/year) | Patent family member(s) | | | Publication date (day/month/year) |
|---|---|---|---|---|---|---|---|
| CN | 115706597 | A | 17 February 2023 | WO | 2023011511 | A1 | 09 February 2023 |
| | | | | IN | 202427008080 | A | 16 February 2024 |
| | | | | BR | 112024002249 | A2 | 07 May 2024 |
| | | | | EP | 4373004 | A1 | 22 May 2024 |
| | | | | US | 2024204844 | A1 | 20 June 2024 |
| CN | 112187324 | A | 05 January 2021 | | None | | |
| CN | 113632398 | A | 09 November 2021 | WO | 2020199045 | A1 | 08 October 2020 |
| CN | 116095742 | A | 09 May 2023 | WO | 2023078329 | A1 | 11 May 2023 |
| | | | | US | 2024283515 | A1 | 22 August 2024 |
| | | | | EP | 4429135 | A1 | 11 September 2024 |
| | | | | JP | 2024538325 | W | 18 October 2024 |
| CN | 115706634 | A | 17 February 2023 | WO | 2023011570 | A1 | 09 February 2023 |
| | | | | IN | 202417007729 | A | 16 February 2024 |
| | | | | EP | 4373005 | A1 | 22 May 2024 |
| | | | | US | 2024178893 | A1 | 30 May 2024 |
| | | | | JP | 2024530013 | W | 14 August 2024 |
| US | 2019334587 | A1 | 31 October 2019 | EP | 3776892 | A1 | 17 February 2021 |
| | | | | KR | 20200136983 | A | 08 December 2020 |
| | | | | US | 2023379013 | A1 | 23 November 2023 |
| | | | | WO | 2019209088 | A1 | 31 October 2019 |
| | | | | US | 2022385338 | A1 | 01 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202311288632